# EUROPEAN PATENT APPLICATION

(11) **EP 2 528 333 A2**
(43) Date of publication of application: **28.11.2012**
(21) Application number: 11733090.2
(22) Date of filing: 13.01.2011
(51) Int. Cl.: H04N 13/00

(54) **BROADCAST SIGNAL RECEIVER AND METHOD FOR PROCESSING VIDEO DATA**

(30) Priority: 18.01.2010 US 296002 P
(71) Applicant: LG Electronics Inc., Seoul 150-721 (KR)
(72) Inventor: SUH, Jong Yeul, Seoul 137-724 (KR); KIM, Kwan Suk, Seoul 137-724 (KR)
(74) Representative: Katérle, Axel
(86) International application number: PCT/KR2011/000261
(87) International publication number: WO 2011/087303

(57) **Abstract**

The present invention relates to a broadcast signal receiver and to a data-processing method for same, which can output a portion of 3D vide data contained in a single video stream as 2D images using signaling information associated with 2D images. Particularly, the receiver and method of the present invention involve acquiring signaling information contained in a specific area of the video stream, extracting a portion of 3D video data, and outputting the extracted portion as 2D images using the acquired signal information. In addition, the receiver and method of the present invention are advantageous in that the image of the extracted portion can be resized using the acquired signal information, thereby providing both 2D and 3D images without consuming additional bandwidth.

## Description

### TECHNICAL FIELD

The present invention relates to a broadcast receiver and a video data processing method thereof, and more particularly, to a broadcast signal receiver for receiving and processing 3D video data and a video data processing method thereof.

### BACKGROUND ART

Generally, a 3-dimensional (3D) image (or stereoscopic image) provides a stereoscopic effect using the stereoscopic visual principle of both eyes. Since human depth perception is based upon binocular parallax caused by a distance between the eyes of about 65 mm, the 3D image enables both right and left eyes to respectively view associated plane images, resulting in the stereoscopic effect and perspective effect.

Such a method for displaying a 3D image may be classified into a stereoscopic scheme, a volumetric scheme, a holographic scheme, etc. In case of the stereoscopic scheme, a left view image to be viewed by the left eye and a right view image to be viewed by the right eye are provided so that the user's left eye views the left view image and the user's right eye views the right view image through polarized glasses or a display device, resulting in recognition of the 3D image effect.

### DETAILED DESCRIPTION OF THE INVENTION

### Technical Problems

It is a technical object of the present invention to provide more efficient and convenient broadcast environments to users by processing appropriate video data in a reception device capable of displaying 3D images and a reception device capable of displaying only 2D images and by generating images suitable for each of the reception devices.

### Technical Solutions

To achieve the above technical object, a video data processing method of a broadcast signal receiver according to an embodiment of the present invention includes receiving a broadcast signal which includes a video stream including a plurality of frames for 3D image display; extracting the video stream from the received broadcast signal; obtaining 2D display window area information from the extracted video stream, wherein the 2D display window area information indicates a 2D display window area including a partial area of a frame in order to display the partial area of the frame as a 2D image with respect to each of the plurality of frames for 3D image display; cropping the partial area of the frame using the obtained 2D display window area information; and resizing the 2D display window area including the cropped partial area of the frame.

To achieve the above technical object, a broadcast signal receiver according to another embodiment of the present invention includes a tuner for receiving a broadcast signal which includes a video stream including a plurality of frames for 3D image display; a demultiplexer for extracting the video stream from the broadcast signal; a decoder for obtaining 2D display window area information from the extracted video stream, wherein the 2D display window area information indicates a 2D display window area including a partial area of a frame in order to display the partial area of the frame as a 2D image with respect to each of the plurality of frames for 3D image display; a cropper for cropping the partial area of the frame using the obtained 2D display window area information; and a controller for resizing the 2D display window area including the cropped partial area of the frame.

### Advantageous Effects

According to the present invention, a broadcast signal receiver can output part of 3D video data included in one video stream as 2D images using signaling information related to the 2D images. In addition, according to the present invention, a broadcast signal receiver can appropriately change and control 2D images output using signaling information related to the 2D images.

### BRIEF DESCRIPTION OF THE DRAWINGS

Fig. 1 is a diagram illustrating a syntax structure of user_data including 2D display window area information according to a first embodiment of the present invention;

Fig. 2 is a diagram illustrating a syntax structure of user_data_registered_itu_t_35() including 2D display window area information according to a second embodiment of the present invention;

Fig. 3 is a diagram illustrating a syntax structure of 2D_display_window_data () information according to the present invention;

Fig. 4 is a flowchart illustrating a method through which a receiver obtains 2D_display_window_data () information according to the present invention;

Fig. 5 is a flowchart illustrating a method through which a receiver resizes a 2D display window area using 2d_display_window_data () information according to the present invention;

Fig. 6 is a diagram illustrating an embodiment of resizing a 2D display window area according to the present invention;

Fig. 7 is a diagram illustrating constituent elements of a broadcast signal receiver for processing a 3D broadcast signal including 2D display window area information according to an embodiment of the present invention; and

Fig. 8 is a flowchart illustrating a video data processing method of a receiver according to the present invention.

### BEST MODE FOR CARRYING OUT THE INVENTION

Reference will now be made in detail to the exemplary embodiments of the present invention, examples of which are illustrated in the accompanying drawings. The present invention should not be limited to the specific embodiments described herein.

Most terms disclosed in the present invention are defined in consideration of functions of the present invention and correspond to general terms well known in the art and may vary according to intention of those skilled in the art, usual practices, or introduction of new technologies. Some of the terms mentioned in the description of the present invention may have been selected by the applicant at his or her discretion, and in such cases the detailed meanings thereof will be described in relevant parts of the description herein. Thus, the terms used in this specification should be interpreted based on the substantial meanings of the terms and the content of this specification rather than their simple names or meanings.

A 3D image display method includes a stereoscopic image display scheme in which two viewpoints are considered and a multi-view image display scheme in which three or more viewpoints are considered. In contrast, a conventional single view image scheme may be referred to as a monoscopic image scheme.

The stereoscopic image display scheme uses one pair of right and left images acquired when a left-side camera and a right-side camera spaced apart from each other by a predetermined distance capture the same target object. The multi-view image display scheme uses three or more images captured by three or more cameras spaced apart by a predetermined distance or angle. Although the following description discloses embodiments of the present invention using the stereoscopic image display scheme as an example, the inventive concept of the present invention may also be applied to the multi-view image display scheme.

A stereoscopic image multiplexing format according to the present invention includes a side-by-side format, a top-bottom format, and a checker board format. In the side-by-side format, each of a left image and a right image is 1/2 down-sampled in a horizontal direction, the sampled image is located at the left side of a display screen, and the other sampled image is located at the right side of the display screen, so that a single stereoscopic image is formed. In the top-bottom format, each of the left image and the right image is 1/2 down-sampled in a vertical direction, the sampled image is located at an upper part of a display screen, and the other sampled image is located at a lower part of the display screen, so that a single stereoscopic image is formed. In the checker board format, each of a left image and a right image is 1/2 sub-sampled to cross in vertical and horizontal directions so that the two images are integrated into one image. Nonetheless, the stereoscopic image multiplexing format is not restricted or limited to the above examples.

A stereoscopic image or multi-view image may be compressed and coded before transmission according to a variety of methods including a Moving Picture Experts Group (MPEG) scheme. For example, the stereoscopic image or multi-view image may be compressed and coded according to an MPEG-2 or H.264/Advanced Video Coding (AVC) scheme. In this case, a reception system may obtain a 3D image by decoding a received image in reverse order of the MPEG-2 or H.264/AVC coding scheme.

In addition, one of a left view image and a right view image of stereoscopic images or one of multiple-view images may be assigned as a base layer image and the remaining one may be assigned as an extended layer image. The base layer image may be encoded using the same scheme as a monoscopic imaging scheme. In the extended layer image, only information on the relationship between the base layer image and the extended layer image may be encoded and transmitted. An exemplary compression and coding scheme for the base layer image may include JPEG, MPEG-2, MPEG-4, and H.264/AVC.

However, if it is desired to transmit 3D images, compatibility with 2D images should be considered, because a receiver which does not support 3D image display should display 3D images contained in a received broadcast signal as 2D images and a 3D receiver should be able to display 2D images when necessary.

Accordingly, a transmitting side can transmit one of a left view image and a right view image by performing coding using a scheme compatible with 2D images. In this case, the image of a viewpoint to be coded through the scheme compatible with 2D images may vary according to designer intention. In addition, the image may be transmitted through two video streams, that is, a video stream through which a base layer image compatible with a 2D image is transmitted and a video stream through which an additional extended layer image for 3D display is transmitted. Here, the transmitting side should additionally transmit information about a viewpoint so that the 3D receiver can accurately match viewpoints of left output and right output. However, when an image is transmitted through two video streams, it is necessary to extend bandwidth for maintaining existing picture quality and output control of the video stream using the information about the viewpoint transmitted additionally to match the viewpoints of left output and right output is needed.

Accordingly, the present invention proposes a broadcast signal receiver and a video data processing method, for transmitting both a base layer image for a 3D program and an additional extended layer image for 3D display through one video stream and outputting part of images included in the video stream as 2D images. In this case, since part of a 3D image frame can be utilized as 2D images, both 2D and 3D images can be provided without consuming additional bandwidth.

The transmitting side may transmit signaling information necessary for outputting part of the 3D image frame as 2D images and the receiver may output the 2D images by extracting part of the 3D image frame using the signaling information. In the present invention, the above-described signaling information may be referred to as 2D display window area information and a display area including a partial area of the 3D image frame used for the 2D images may be referred to as a 2D display window area. In addition, the 2D display window area information may include information indicating the 2D display window area and include ranges of vertical and horizontal coordinates indicating the 2D display window area. The ranges of the vertical and horizontal coordinates may vary according to designer intention.

According to the present invention, the video stream may include a plurality of video stream sections, each of which may be configured in the unit of a video frame, a picture, or a sequence. The video frame, picture, and sequence according to the present invention may include a left view and a right view.

Therefore, the 2D display window area may be defined with respect to each video frame, each picture, or each sequence included in one video stream. Namely, the 2D display window area information may include information indicating the 2D display window area of each frame included in the video stream. If a viewpoint of an image included in the 2D display window area is changed to a left view image or a right view image in each video stream section, the receiver may output the 2D display window area including a necessary image according to the changed viewpoint using the 2D display window area information.

As one embodiment of the present invention, a method for outputting a 2D image using 2D display window area information included in a video stream in a receiver is proposed. The present invention provides two embodiments. In the first embodiment, a video stream is compressed and coded according to an MPEG-2 scheme. In the second embodiment, a video stream is compressed and coded according to an H.264/AVC scheme. Each of the embodiments will now be described.

In the first embodiment, a video stream is compressed and coded according to an MPEG-2 scheme. In this case, 2D display window area information may be transmitted in a header region of each picture of the video stream. Accordingly, a receiver may acquire the 2D display window area information by decoding the header region of the picture.

In the second embodiment, a video stream is compressed and coded according to an H.264/AVC scheme. In this case, 2D display window area information may be transmitted through a Supplemental Enhancement Information (SEI) area. Then, the receiver may obtain the 2D display window area information by parsing an AVC Network Abstraction Layer (NAL) unit.

Hereinafter, a syntax structure including the 2D display window area information according to each embodiment of the present invention will be described.

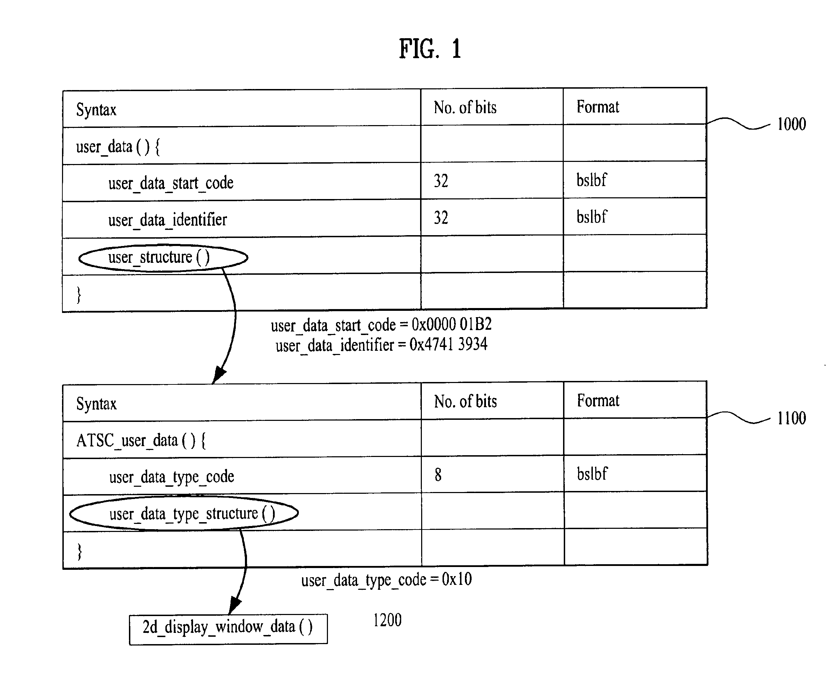

Fig. 1 is a diagram illustrating a syntax structure of user_data including 2D display window area information according to a first embodiment of the present invention.

The 2D display window area information according to the first embodiment of the present invention may be included in a header region of each picture, more specifically, in user_data information 1000 of a Picture Extension and User Data region.

A receiver may receive and decode the Picture Extension and User Data region after receiving a picture header and picture coding extension. Next, the receiver may obtain the user_data information syntax 1000. user_structure() information may be defined through values user_data_start_code information and user_data_identifier information included in the user_data information 1000. Especially, according to one embodiment of the present invention, the receiver uses the user_structure() information when a value of the user_data_start_code information is 0x0000 01B2 and a value of the user_identifier information is 0x4741 3934.

The receiver may obtain an ATSC_user data() information syntax 1100 indicated by the user_structure() information. Next, the receiver may obtain 2D display window area (2d_display_window_data ()) information 1300 using user_data_type_code information and user_data_type_structure() information included in the ATSC_user_data() syntax 1100. The receiver may acquire 2D display window area information for current video data by decoding the 2d_display_window_data () information. Hereinafter, detailed contents of information included in each syntax will be described.

The user_data information syntax 1000 may include the user_data_start_code information, the user_data_identifier information, and the user_structure() information. Each of the above information items will be described below.

The user_data_start_code information is fixedly set to 0x0000 01B2.

The user_data_identifier information is 32 bits in size that indicate data included in the user_structure() information. In the present invention, the value of the user_data_identifier information is 0x4741 3934 that indicates that the user_structure() information includes the ATSC_user_data() syntax 1100.

The user_structure() information indicates a data structure having a variable length defined according to the user_data_identifier information value.

The ATSC_user_data() syntax 1100 may include user_data_type_code information and user_data_type_structure() information. Each piece of the above information will now be described.

The user_data_type_code information is 8 bits in size that indicates the type of data included in the user_data_type_structure() information. According to the first embodiment of the present invention, if the value of the user_data_type_code information is 0x10, this indicates that data included in the user_data_type_structure() is 2D display window area information. If the value of the user_data_type_code information is 0x03, this indicates that data included in the user_data_type_structure() is closed caption data. If the value of the user_data_type_code information is 0x06, this indicates that data included in the user_data_type_structure() is bar_data().

The user_data_type_structure() information may include 2D display window area information 1200. A detailed description of the 2D display window area information 1200 will be given later.

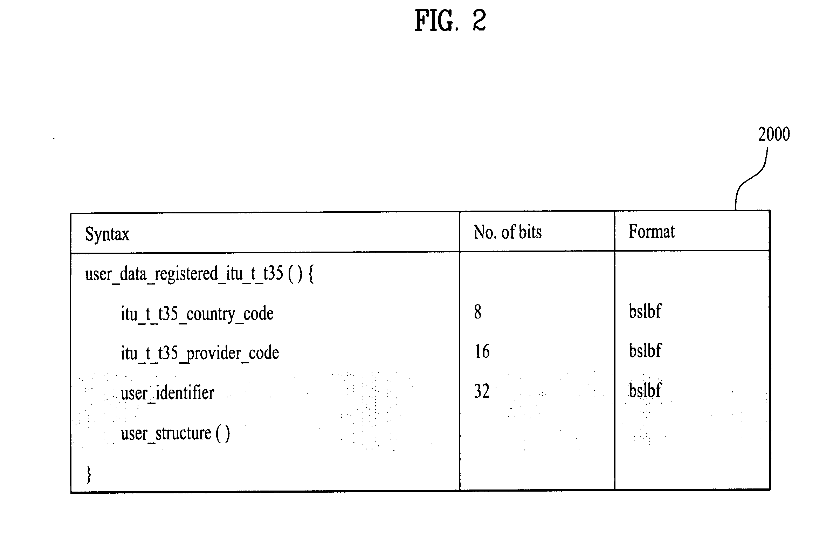

Fig. 2 is a diagram illustrating a syntax structure of user_data_registered_itu_t_35() including 2D display window area information according to a second embodiment of the present invention.

According to the second embodiment of the present invention, a 2D display window area may be transmitted through a Raw Byte Sequence Payload (RBSP) of an SEI region.

The receiver may determine an SEI payloadType value by parsing an AVC NAL unit. If the SEI payloadType value is 4, the receiver may obtain user_identifier information and user_structure() information included in a user_data_registered_itu_t_35() syntax 2000. The SEI region according to the present invention may include additional information which is not indispensable for decoding a Video Coding Layer (VCL) and include timing information of each picture related to a Hypothetical Reference Decoder (HRD), information about a pen/scan function (a function for reading and displaying part of a decoded image), information necessary for performing random access, and information defined by a user. According to the present invention, the SEI of the second embodiment may perform the same role as the Picture Extension and User Data area of MPEG-2 of the first embodiment and may be located at the same location. Moreover, the user_identifier information and the user_structure() information may indicate ASFD bar data or caption data. This may vary according to designer intention.

In addition, the receiver acquires the ATSC_user_data() syntax 1100 included in the user_structure() information and is able to be aware that corresponding data is 2D display window area information using the user_data_type_code information included in the ATSC_user_data() syntax 1100.

In a similar way to the first embodiment, the receiver may acquire 2D display window area information (2d_display_window_data () information) 1300 through the user_structure() information when the value of the user_data_identifier information is 0x4741 3934. The receiver may obtain 2D display window area information for current video data by decoding the 2d_display_window_data () information. Hereinafter, information included in the syntax of Fig. 2 will be described.

A user_data_registered_itu_t_35() syntax 2000 may include itu_t_t35 country code information, itu_t_t35_provider_code information, user_identifier information, and user_structure() information.

The itu_t_t35_country_code information has a fixed size of 8 bits and the itu_t_t35_provider_code information has a fixed size of 16 bits.

The user_identifier information and the user_structure() information are identical to information described with reference to Fig. 1 and, therefore, a detailed description thereof is omitted.

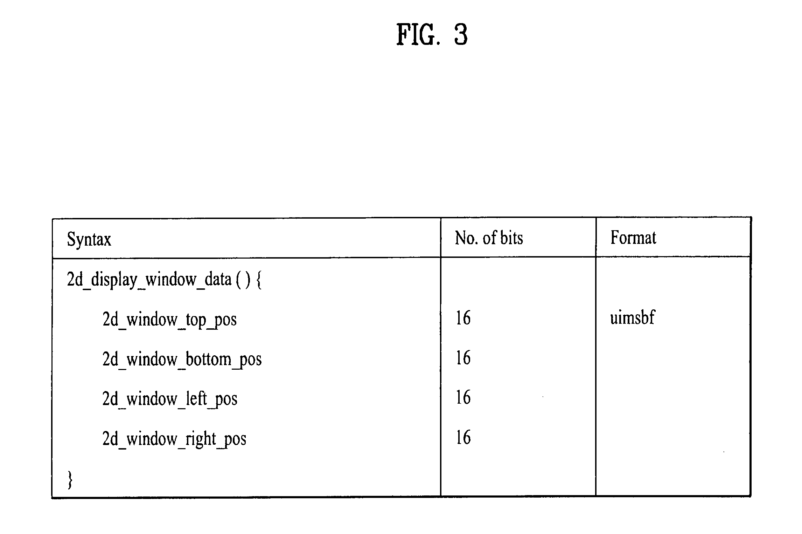

Fig. 3 is a diagram illustrating a syntax structure of 2D_display_window_data () information according to the present invention.

The syntax of the 2D_display_window_data () information may include information indicating ranges of vertical and horizontal coordinates of a 2D display window area. The receiver configures the 2D display window area using the ranges of the vertical/horizontal coordinates and may output a partial image of a frame included in the 2D display window area as a 2D image. The receiver may resize the 2D display window area by adjusting or changing the ranges of the vertical/horizontal coordinates. Information included in the syntax will now be described.

2d_window_top_pos information and 2d_window_bottom_pos information have a 16-bit size each and indicate ranges of vertical coordinates of the 2D display window area, i.e. ranges of the top and bottom of the 2D display window area, respectively.

2d_window_left_pos information and 2d_window_right_pos information have a 16-bit size each and indicate ranges of horizontal coordinates of the 2D display window area, i.e. ranges of the left and right of the 2D display window area, respectively.

Although the syntax structure of the 2D_display_window_data () information of Fig. 3 according to the embodiment of the present invention includes only consecutive vertical/horizontal coordinates, a plurality of ranges of non-consecutive vertical/horizontal coordinates may be defined according to embodiments. That is, since the 2D display window area corresponding to part of an image to be extracted may vary according to a video frame or image multiplexing format for displaying a 3D image, the syntax structure of the 2D_display_window_data () information may include a plurality of ranges of vertical/horizontal coordinates. For example, if a video frame is segmented into images on a pixel basis, the segmented images are distinguished between odd-numbered images and even-numbered images based on a row or column, and images corresponding to the row are extracted from the segmented images to thereby display 2D images, then the syntax structure of the 2D_display_window_data () information may include a plurality of vertical coordinates and a plurality of horizontal coordinates in order to indicate the 2D display window area including the corresponding images.

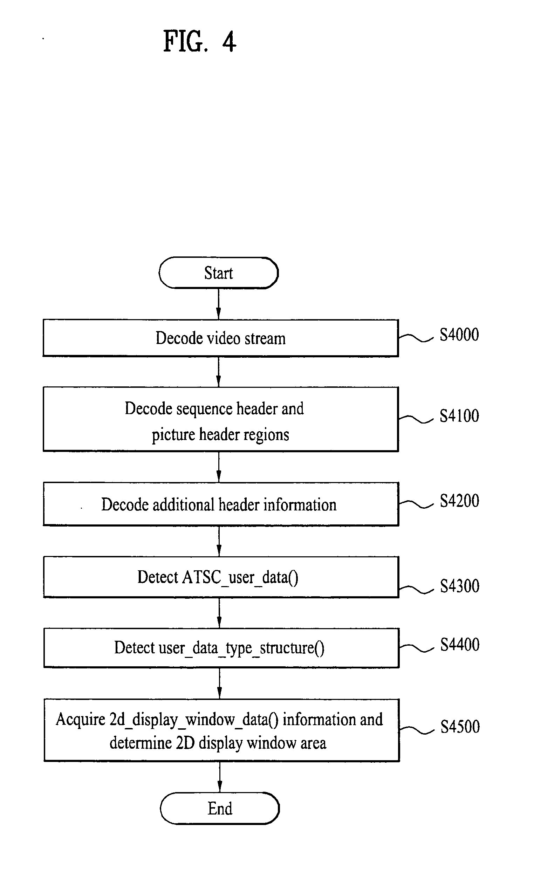

Fig. 4 is a flowchart illustrating a method through which a receiver obtains 2D_display_window_data () information according to the present invention.

The receiver may decode a received video stream (S4000). In this case, the video stream may include a plurality of video stream sections, each of which may be configured in the unit of a video frame, a picture, or a sequence. The video stream according to the present invention may be decoded according to a compression transmission scheme including a JPEG, MPEG-2, MPEG-4, or H.264/AVC scheme.

The receiver may decode sequence header and picture header regions of the decoded video stream (S4100). Thereafter, the receiver may decode additional header information (S4200). The additional header information may be included in a Picture Extension and User Data area when the video stream is compressed and coded using the MPEG-2 scheme according to the first embodiment of the present invention and may be included in an SEI area when the video stream is compressed and coded using the H.264/AVC scheme according to the second embodiment of the present invention. In addition, in the first embodiment of the present invention as described in Fig. 1, the receiver may receive and decode the Picture Extension and User Data area after receiving the picture header and picture coding extension.

The receiver may detect ATSC_user_data() included in the decoded additional header information (S4300). More specifically, according to the first embodiment of the present invention, the receiver may acquire the user_data information syntax 1000 included in the decoded Picture Extension and User Data region and may acquire user_structure () information when the value of user_data_start_code information is 0x0000 01B2 and the value of user_data_identifier information is 0x4741 3934. In this case, the user_structure() information indicates the ATSC_user_data() information syntax 1100. According to the second embodiment of the present invention, the receiver confirms an SEI payloadType value included in the decoded SEI, and if the SEI payloadType value is 4, the receiver may obtain the user_structure () information when the value of the user_identifier information included in the user_data_registered_itu_t_35() syntax 2000 is 0x4741 3934 which is the same as in the first embodiment.

The receiver may detect user_data_type_structure() information included in the ATSC_user_data() syntax 1100 (S4400). In this case, the receiver may obtain the user_data_type_structure() information when the value of the user_data_type_code information included in the ATSC_user_data() syntax 1100 is 0x10. Here, the user_data_type_structure() information may include 2d_display_window_data () information.

The receiver detects and then decodes the 2d_display_window_data () information and may determine a 2D display window area including a partial area of a current frame using the decoded 2d_display_window_data () information (S4500). The 2d_display_window_data () information may include ranges of vertical/horizontal coordinates indicating the 2D display window area as described in association with Fig. 3.

The receiver may extract a partial area of a 3D image included in the 2D display window area using the detected 2d_display_window_data () information and resize the 2D display window area. A detailed description thereof will be given later.

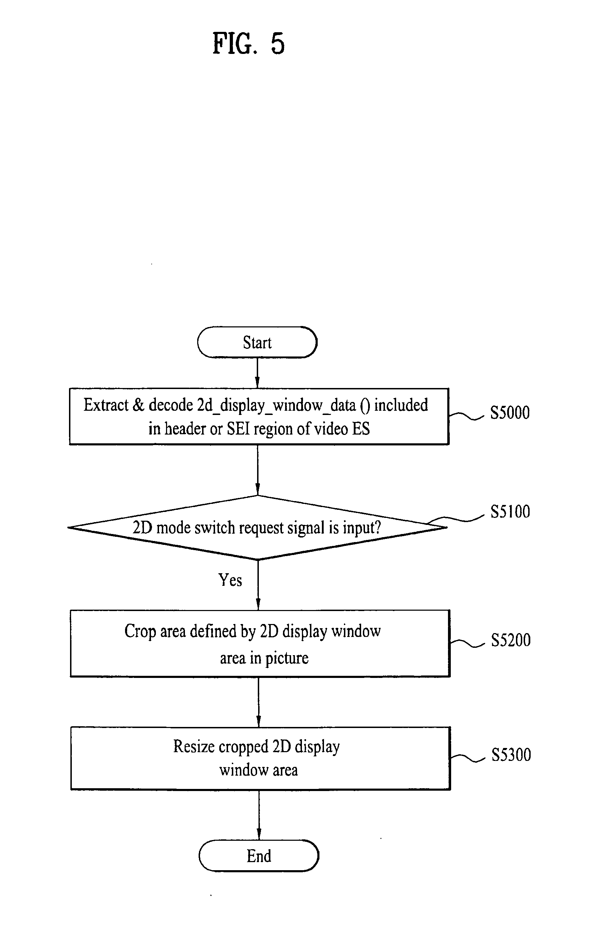

Fig. 5 is a flowchart illustrating a method through which a receiver resizes a 2D display window area using 2d_display_window_data () information according to the present invention.

The receiver may extract and decode 2d_display_window_data () information included in the decoded additional header information of the video stream according to the first or second embodiment of the present invention (S5000).

The 2d_display_window_data () information may include information indicating a 2D display window area including a partial are of a 3D image in order to display the partial area of the 3D image included in the video stream as a 2D image. The information indicating the 2D display window area is the same as the information described in Fig. 3 and therefore a detailed description thereof is omitted.

Next, the receiver may determine whether a 2D mode switch request signal for requesting application of the 2D display window area to the video stream is input (S5100).

If the 2D mode switch request signal is input by a user, the receiver may crop a partial area of a 3D image frame using the decoded 2d_display_window_data () information (S5200).

If no 2D mode switch request signal is input, the receiver does not crop the partial area of the 3D image and performs 3D format conversion etc., thereby outputting the 3D image.

The receiver may resize and then output the 2D display window area cropped using the 2d_display_window_data () information (S5300). In this case, the receiver may resize the 2D display window area through an interpolation or extrapolation scheme for vertical and horizontal coordinates of the 2D display window area.

When a function value F(Q) at a point Q and a function value F(S) at a point S are known with respect to any function F(x), interpolation refers to estimation of a function value at an arbitrary point between the point Q and the point S. The simplest example of interpolation is linear interpolation. In the above case, extrapolation refers to estimation of a function value at a point other than between the point Q and the point S The simplest example of extrapolation is linear extrapolation.

The linear interpolation scheme and linear extrapolation scheme are the simplest examples among numerous interpolation schemes and extrapolation schemes and various interpolation and extrapolation schemes other than the above schemes may be used according to designer intention.

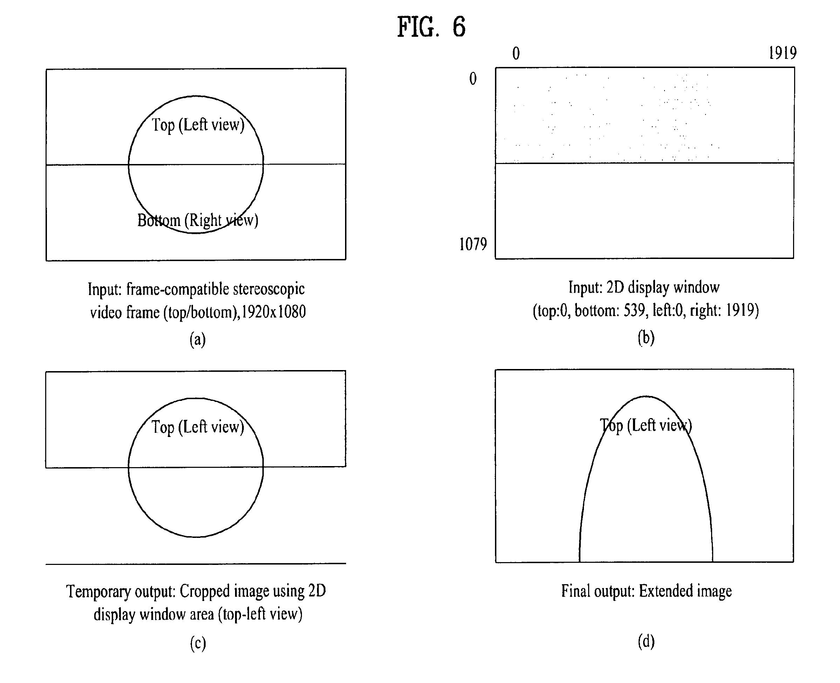

Fig. 6 is a diagram illustrating an embodiment of resizing a 2D display window area according to the present invention.

As described above, the 2D display window area according to the present invention may be defined with respect to a video stream section, i.e. each frame, each picture, or each sequence and the video stream section may include a left view image and a right view image for a 3D image. The 2D display window area may be defined as ranges of vertical/horizontal coordinates included in the 2D display window area information and the receiver may crop a partial area of the 3D image as a 2D image using the 2D display window area information. When necessary, if a viewpoint of a 2D image included in the 2D display window area in the unit of a video stream section is changed from left to right or from right to left, the 2D display window area information for each viewpoint image should be configured. Meanwhile, since the size of a 2D image to be output may be smaller than the size of the receiver, the 2D display window area needs to be resized. Accordingly, the receiver should be able to output the 2D display window area suitable for a viewpoint and receiver size by changing the 2D display window area information in the unit of a video stream section. Hereinafter, the 2D display window area information indicating the 2D display window area according to a viewpoint of a 2D image to be output will be described and an embodiment for resizing the 2D display window area will be described. In this embodiment, a frame of a top-bottom format will be described. However, the present invention is not limited thereto.

In Fig. 6, (a) shows an embodiment of a 3D frame included in a video stream according to the present invention, where the size of the frame is 1920x1080, a stereoscopic image multiplexing format is a top-bottom format, a left view image is located at the top region of the frame, and a right view image is located at the bottom region of the frame.

For example, when the number of frames is 300, if a left view image is set as a 2D image with respect to the first 200 frames and a right view image is set as a 2D image with respect to the other 100 frames, the 2D display window area information may include the following vertical/horizontal coordinate values. The 2D display window area information indicating the 2D display window area for frames starting from frame number 0 to frame number 199 may include vertical coordinate values of top 0 and bottom 539 and horizontal coordinate values of left 0 and right 1919. Further, the 2D display window area information indicating the 2D display window area for frames from frame number 200 to frame number 299 may include vertical coordinate values of top 540 and bottom 1079 and horizontal coordinate values of left 0 and right 1919.

In case of a frame of a side-by-side format, a left view image may be located at the left side of the frame and a right view image may be located at the right side of the frame. In this case, the 2D display window area including the left view image may indicate vertical coordinate values of top 0 and bottom 1079 and horizontal coordinate values of left 0 and right 959. The 2D display window area including the right view image may indicate vertical coordinate values of top 0 and bottom 1079 and horizontal coordinate values of left 960 and right 1079.

In Fig. 6, (b) shows an embodiment of a 2D display window area when a left view image is configured as a 2D image, where coordinate values included in 2D display window area information are top 0, bottom 539, left 0, and right 1919.

In Fig. 6, (c) shows an embodiment of a 2D display window area including a left view image according to the present invention.

The receiver may crop an image using a coordinate value included in 2D display window area information and display a 2D display window area including the cropped image. In this embodiment, since the 2D display window area including the left view image is located at the top of the frame, the 2D display window area is displayed only on the top which is half of a receiver screen. Accordingly, the 2D display window area needs to be resized so as to be displayed on the entire receiver screen.

In Fig. 6, (d) shows an embodiment of a resized 2D display window area according to the present invention. As described with reference to Fig. 5, the receiver may resize the 2D display window area by performing interpolation or extrapolation with respect to ranges of vertical and horizontal coordinates of the 2D display window area.

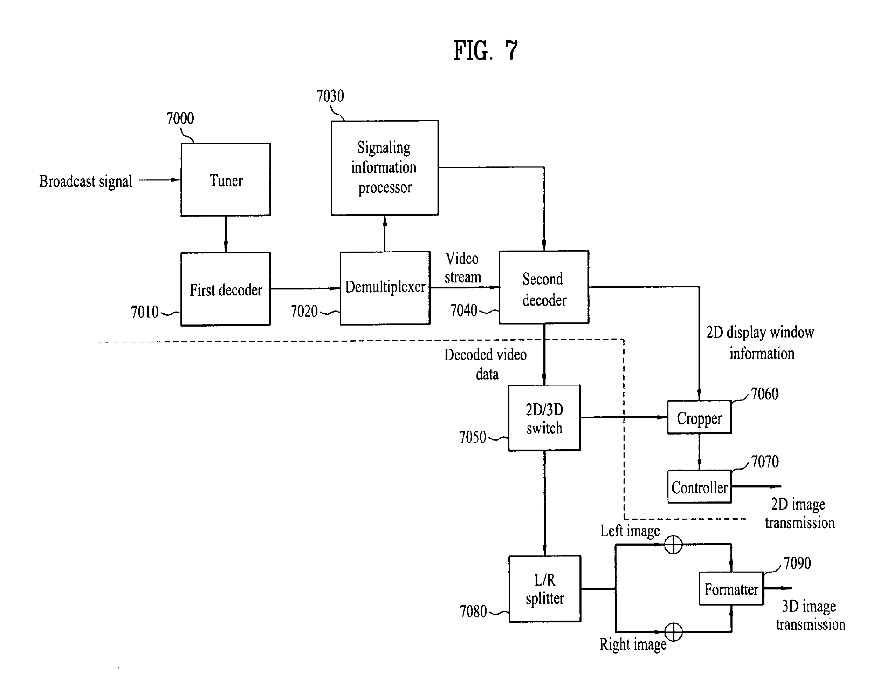

Fig. 7 is a diagram illustrating constituent elements of a broadcast signal receiver for processing a 3D broadcast signal including 2D display window area information according to an embodiment of the present invention.

The broadcast signal receiver according to the present invention may include a tuner 7000, a first decoder 7010, a demultiplexer 7020, a signaling information processor 7030, a second decoder 7040, a 2D/3D switch (or signal determiner) 7050, a cropper 7060, a controller 7070, a Left (L)/Right (R) splitter 7080, and a formatter 7090.

The tuner 7000 may tune to a received broadcast signal, demodulate the tuned broadcast signal, and output the demodulated broadcast signal to the first decoder 7010. In this case, the tuner 7000 may perform Vestigial Side Band (VSB) demodulation or Orthogonal Frequency Division Multiplexing (OFDM) demodulation.

The first decoder 7010 decodes the demodulated broadcast signal and outputs the decoded broadcast signal to the demultiplexer 7020. The signaling information processor 7030 parses signaling information. The signaling information may include PSI/PSIP etc. The demultiplexer 7020 may extract a video stream PID from the signaling information, extract a video stream from the decoded broadcast signal using the video stream PID, and output the extracted video stream to the second decoder 7040.

The second decoder 7040 may obtain 2D display window area information including information for displaying a 2D image from the extracted video stream and transmit the obtained 2D display window area information to the cropper 7060. According to the first embodiment of the present invention, the video decoder 7040 may obtain the 2D display window area information by decoding a header region of a picture. According to the second embodiment of the present invention, the video decoder 7040 may obtain the 2D display window area information by parsing the AVC NAL unit.

The 2D/3D switch (or signal determiner) 7050 may determine whether a 2D mode switch request signal for requesting 2D display of the extracted video stream is input.

If the 2D mode switch request signal is input, the cropper 7060 may crop a partial area of a frame included in the video stream using the 2D display window area information. The 2D display window area information may be defined with respect to each frame.

The cropped partial area of the frame is transmitted to the controller 7070 and the controller 7070 may display a 2D display window area including the cropped partial area of a picture. The 2D display window area may include a left view image or a right view image included in a video stream section unit. At this time, the controller 7070 may resize the 2D display window area including the left view image or the right view image by changing the 2D display window area information in the unit of a video stream section.

If the 2D mode switch request signal is not input, the L/R splitter 7080 may split the video stream into the left view image or the right view image and output the split images to the formatter 7090. The formatter 7090 may receive the left and right view images and output a 3D image by performing 3D format conversion.

If the receiver does not support 3D image display, operation of the cropper 7060 and the controller 7070 may be performed even though the 2D mode switch request signal is not input.

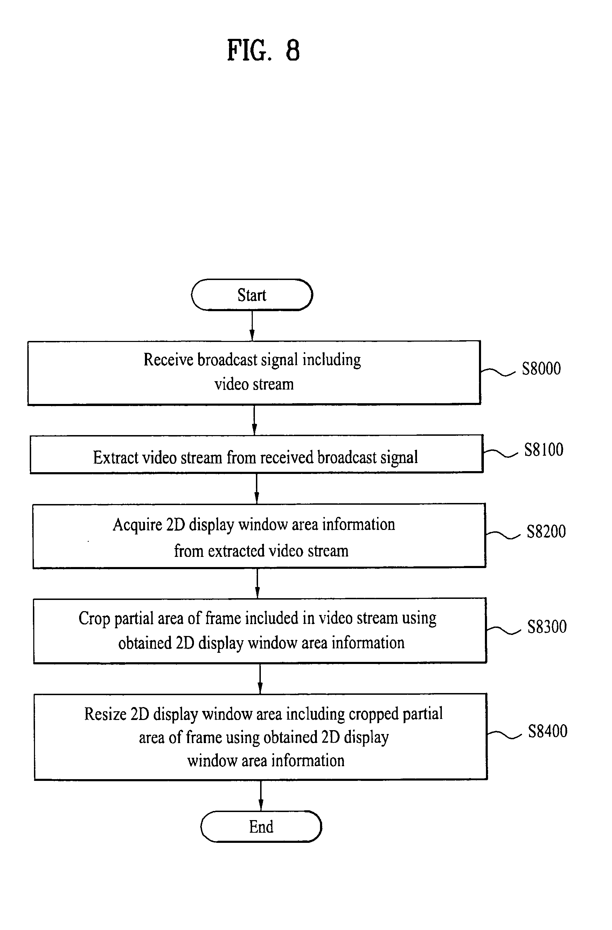

Fig. 8 is a flowchart illustrating a video data processing method of a receiver according to the present invention.

The tuner 7000 may receive a broadcast signal including a video stream (S8000). The video stream may include a plurality of frames for 3D image display.

The demultiplexer 7020 may extract the video stream from the received broadcast signal (S8100).

The decoder 7040 may acquire 2D display window area information from the extracted video stream (S8200). As described with reference to Fig. 1 and Fig. 2, the decoder 7040 may acquire the 2D display window area information by decoding a header region of a picture according to the first embodiment of the present invention or acquire the 2D display window area information by parsing the AVC NAL unit according to the second embodiment of the present invention.

The 2D display window area information according to the present invention may include information indicating the 2D display window area including a partial area of a frame in order to display the partial area of the frame with respect to each of a plurality of frames as a 2D image. In this case, the 2D display window area information may include a range of vertical coordinates and a range of horizontal coordinates indicating the 2D display window area.

The cropper 7060 may crop the partial area of the frame using the obtained 2D display window area information (S8300). The cropped partial area of the frame may correspond to a plurality of images having different viewpoints, more specifically, one of a left image and a right image.

Next, the controller 7070 may resize the 2D display window area including the cropped partial area of the frame using the obtained 2D display window area information (S8400). The controller 7070 may resize the 2D display window area by performing interpolation or extrapolation with respect to the range of vertical coordinates and the range of horizontal coordinates indicating the 2D display window area.

### MODE FOR INVENTION

As described previously, various embodiments have been described in the best mode for carrying out the invention.

### INDUSTRIAL APPLICABILITY

As described above, the present invention may be totally or partially applied to a digital broadcasting system.

## Claims

1. A video data processing method of a broadcast signal receiver, comprising:
receiving a broadcast signal which includes a video stream including a plurality of frames for 3D image display;
extracting the video stream from the received broadcast signal;
obtaining 2D display window area information from the extracted video stream, wherein the 2D display window area information indicates a 2D display window area including a partial area of a frame in order to display the partial area of the frame as a 2D image with respect to each of the plurality of frames for 3D image display;
cropping the partial area of the frame using the obtained 2D display window area information; and
resizing the 2D display window area including the cropped partial area of the frame.

2. The video data processing method of claim 1, wherein the 2D display window area information includes a range of vertical coordinates and a range of horizontal coordinates indicating the 2D display window area.

3. The video data processing method of claim 2, wherein resizing the 2D display window area including the cropped partial area of the frame includes resizing the 2D display window area by adjusting the range of vertical coordinates and the range of horizontal coordinates indicating the 2D display window area.

4. The video data processing method of claim 1, wherein the partial area of the frame corresponds to a plurality of images having different viewpoints.

5. The video data processing method of claim 1, wherein obtaining 2D display window area information includes decoding a sequence header region and a picture header region of the video stream, and obtaining the 2D display window area information from the decoded picture header region.

6. The video data processing method of claim 5, wherein the 2D display window area information is included in a user data region of the decoded picture header region.

7. The video data processing method of claim 1, wherein obtaining 2D display window area information includes decoding Supplemental Enhancement Information (SEI) from the video stream, and obtaining the 2D display window area information from the decoded SEI.

8. A broadcast signal receiver, comprising:
a tuner for receiving a broadcast signal which includes a video stream including a plurality of frames for 3D image display;
a demultiplexer for extracting the video stream from the broadcast signal;
a decoder for obtaining 2D display window area information from the extracted video stream, wherein the 2D display window area information indicates a 2D display window area including a partial area of a frame in order to display the partial area of the frame as a 2D image with respect to each of the plurality of frames for 3D image display;
a cropper for cropping the partial area of the frame using the obtained 2D display window area information; and
a controller for resizing the 2D display window area including the cropped partial area of the frame.

9. The broadcast signal receiver of claim 8, wherein the 2D display window area information includes a range of vertical coordinates and a range of horizontal coordinates indicating the 2D display window area.

10. The broadcast signal receiver of claim 9, wherein the controller adjusts the range of vertical coordinates and the range of horizontal coordinates indicating the 2D display window area.

11. The broadcast signal receiver of claim 8, wherein the partial area of the frame corresponds to a plurality of images having different viewpoints.

12. The broadcast signal receiver of claim 8, wherein the decoder decodes a sequence header region and a picture header region of the video stream and obtains the 2D display window area information from the decoded picture header region.

13. The broadcast signal receiver of claim 12, wherein the decoder obtains the 2D display window area information from a user data region of the decoded picture header region.

14. The broadcast signal receiver of claim 8, wherein the decoder decodes Supplemental Enhancement Information (SEI) from the video stream and obtains the 2D display window area information from the decoded SEI.
